# NOUVEAU FASCICULE DE BREVET EUROPEEN

(11) **EP 0 553 079 B2**
(45) Date de publication et mention de la décision concernant l'opposition: **27.10.1999**
(45) Mention de la délivrance du brevet: 03.01.1996
(21) Numéro de dépôt: 91907487.2
(22) Date de dépôt: 29.03.1991
(51) Int. Cl.: A01G 9/14

(54) **POUTRE-CHENEAU POUR SERRES**
TRÄGERRINNE FÜR GEWÄCHSHÄUSER
GUTTER BEAM FOR GLASSHOUSES

(30) Priorité: 18.10.1990 FR 9013149
(43) Date de publication de la demande: 04.08.1993
(73) Titulaire: SERRES DE FRANCE (SA), F-13810 Eygalières (FR)
(72) Inventeur: RICHEL, Pierre, F-13810 Eygalières (FR)
(74) Mandataire: Roman, Michel
(86) Numéro de dépôt international: FR9100253
(87) Numéro de publication internationale: WO9206586

(56) Documents cités:
- FR-A- 1 281 951
- FR-A- 2 367 425
- FR-A- 2 503 985
- NA-A- 7 017 622
- NL-A- 7 908 762
- US-A- 1 967 769
- US-A- 4 201 019

## Description

La présente invention a pour objet une poutre-cheneau pour serres selon le préambule de la revendication 1 (voir NL-A-7908762).

Elle est destinée à l'équipement des serres dites "serres chapelles" de toutes dimensions.

Les exigences actuelles relatives à la culture sous serres nécessitent que ces dernières soient de plus en plus étanches, ce qui entraîne une condensation importante en particulier sur les vitrages ou films plastiques de toiture. Cette condensation est préjudiciable à la transmission de la lumière et au bon état sanitaire des plantes, il est par conséquent souhaitable de l'évacuer autant que possible.

D'autre part, on recherche également le maximum de lumière en diminuant le nombre de pièces de construction en acier telles que poteaux, cheneaux, fermes, en jouant sur la structure par l'augmentation des dimensions des modules et en particulier leur longueur.

Les brevets français N° 2 367 425 et N° 2 503 985 concernent tous deux des cheneaux pour serres étudiés tout particulièrement pour permettre la fixation sur leurs bords latéraux des films plastiques de toiture, ce qui n'est pas l'objet principal de la présente invention.

Le dispositif suivant la présente invention a pour but d'atteindre les objectifs mentionnés ci-dessus. En effet, il permet non seulement de récupérer et d'évacuer les eaux de condensations, mais également de renforcer l'armature et d'autoriser de ce fait des longueurs de travées plus importantes et une diminution du nombre de pièces de construction à mettre en oeuvre, ce qui entraîne un gain de place au sol pour l'utilisateur et un gain de temps au montage. Il permet en outre de supprimer tous les bracons qui sont une entrave au développement des écrans divers (ombrage, thermique, etc) qui sont de plus en plus utilisés.

Il est caractérisé en ce que lesdites parties supérieure et inférieure sont constituées chacune d'un profilé en tôle d'acier pliée.

Sur les dessins annexés, donnés à titre d'exemple non limitatif d'une des formes de réalisation de l'objet de l'invention:
la figure 1 représente en perspective l'ossature métallique d'une serre construite à l'aide de poutres-cheneaux,
la figure 2 est une coupe transversale agrandie de la poutre-cheneau montrant l'écoulement de l'eau de condensation.

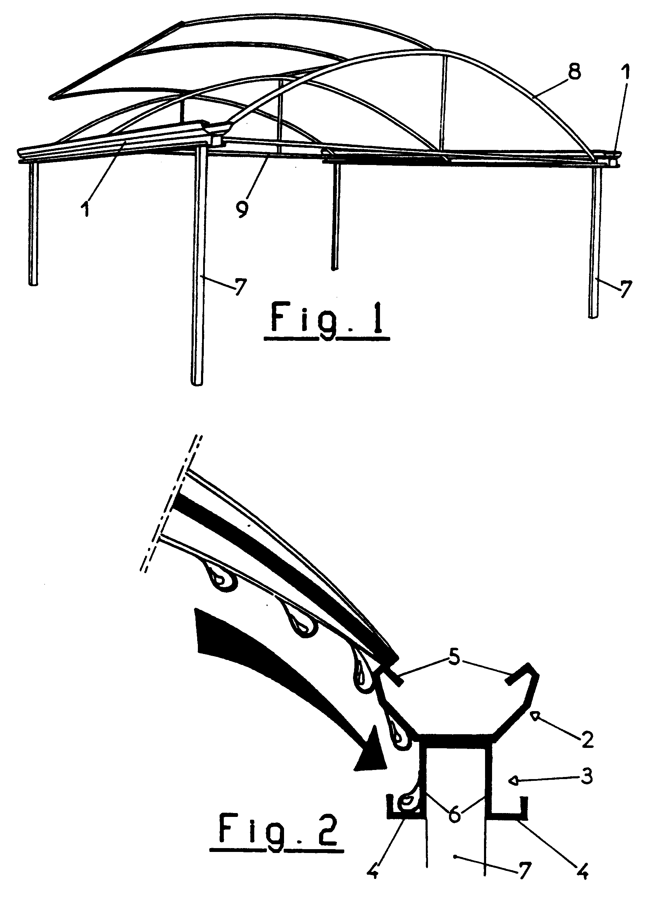

Le dispositif, figures 1 et 2, est constitué d'une poutre-cheneau 1 formée par l'assemblage d'un profilé supérieur 2 jouant le rôle de cheneau et d'un profilé inférieur 3 ayant la fonction d'une poutre et comportant des gouttières latérales 4 de récupération d'eau de condensation.

Les bords 5 du profilé supérieur 2 sont repliés vers l'intérieur de manière à augmenter la rigidité de l'ensemble et fixer la couverture.

Le profilé inférieur 3 est constitué d'une bande horizontale solidaire du fond du profilé supérieur et fixée à lui par soudage ou boulonnage, et de deux côtés 6 verticaux dont le bas est replié pour former les gouttières 4. La largeur de la bande horizontale est telle que le profilé inférieur puisse coiffer les poteaux 7 de la serre et s'ajuster sur eux. Les côtés 6 sont utilisés pour fixer les fermes 8 ou traverses 9, et leur hauteur déterminée en fonction du type de serre à construire.

La poutre-cheneau est réalisée par l'assemblage de deux profilés en tôle d'acier pliée.

La grande rigidité de la poutre-cheneau, due à sa conception, permet d'augmenter la portée entre deux poteaux et par conséquent de diminuer leur nombre, ainsi que de supprimer tous les bracons généralement utilisés dans ce genre de construction, ce qui permet d'abaisser sensiblement le coût global de construction.

Le positionnement des divers éléments constitutifs donne à ce dispositif un maximum d'effets utiles qui n'avaient pas été obtenus à ce jour par des dispositifs similaires.

## Revendications

1. Poutre-cheneau pour serres destinée a l'équipement des serres dites serres chapelles de toutes dimensions, constituée de sorte que l'eau de condensation sur le côté intérieur de la couverture de serres puisse être récupérée, et formée d'une partie supérieure (2) formant chéneau, et d'une partie inférieure (3) formant poutre et ayant une section en Oméga avec des angles à 90 degrés, les ailes constituant des gouttières (4) de récupération de l'eau de condensation,
caractérisée en ce que lesdites parties supérieure (2) et inférieure (3) sont constituées chacune d'un profilé en tôle d'acier pliée.

2. Poutre-cheneau suivant la revendication 1, se caractérisant par le fait que la partie inférieure (3) est un profilé constitué d'une bande horizontale solidaire du fond du profilé supérieur (2), et de deux côtés (6) verticaux dont le bas est replié pour former les gouttières (4), la largeur de la bande horizontale étant telle que ledit profilé inférieur puisse coiffer les poteaux (7) de la serre et s'ajuster sur eux, les côtés (6) étant déterminés pour permettre la fixation des fermes (8) ou traverses (9).

3. Poutre-cheneau suivant l'une quelconque des revendications précédentes, se caractérisant par le fait que les deux profilés formant la partie supérieure (2) et la partie inférieure (3) sont assemblées par boulonnage ou soudage.

4. Poutre-cheneau suivant l'une quelconque des revendications précédentes, se caractérisant par le fait que la partie supérieure (2) est un profilé ayant une section en "C" avec les bords (5) repliés vers l'intérieur afin de pouvoir être utilisés pour fixer la couverture.

## Claims

1. Gutter-beam for use on so-called multispan greenhouses of all dimensions, and constructed so that the condensation water on the inside of the greenhouse cover sheet can be recovered, and formed of an upper part (2) forming gutter and a lower part (3) forming beam with an omega-shaped section with 90° angles, the flanges constituting gutters (4) to recover condensation water,
characterized in that the said upper (2) and lower (3) parts each consist of a folded steel sheet section.

2. Gutter-beam as per claim 1 characterized in that the lower part (3) is a section consisting of a horizontal strip forming an integral part of the bottom of the upper section (2) and two vertical sides (6), the bottom of which is folded to form the gutters (4), the width of the horizontal strip being such that the lower section can cap the columns (7) of the greenhouse and be adjusted thereon, the sides (6) being determined to allow fixing of the trusses (8) or cross members (9).

3. Gutter-beam as per any one of the aforesaid claims characterized in that the two sections forming the upper part (2) and lower part (3) are assembled by bolting or welding.

4. Gutter-beam according to any one of the aforesaid claims characterized in that the upper part (2) is a C-shaped section with edges (5) folded inwards so that it can be used to secure the cover sheeting.

## Patentansprüche

1. Träger-Traufe für Foliengewächshäuser, bestimmt zur Ausrüstung von sogenannten Folienblocks aller Abmessungen und so gestaltet, daß das Kondenswasser auf der Innenseite der Abdeckung der Foliengewächshäuser aufgefangen werden kann, bestehend aus einem oberen Teil (2), welcher die Traufe bildet, und einem unteren Teil (3), welcher den Träger bildet mit einem Querschnitt im Omega-Profil mit Winkeln von 90°, wobei die Schenke als Rinnen (4) zum Auffangen des Kondenswassers ausgebildet sind,
dadurch gekennzeichnet, daß der besagte obere Teil (2) und der besagte untere Teil (3) jeweils aus einem gefalzten Stahlblechprofil hergestellt sind.

2. Träger-Traufe gemäß Anspruch 1, dadurch gekennzeichnet, daß der untere Teil (3) ein aus einem ein horizontales Band bildenden Profil, welches fest mit dem Boden des oberen Profils (2) verbunden ist, und aus zwei vertikalen Seiten (6) besteht deren unteres Teil gefalzt ist, um die Rinnen (4) zu bilden, wobei die Breite des horizontalen Bandes so ausgelegt ist, daß das besagte untere Profil die Pfosten (7) des Foliengewächshauses abdecken und auf diese eingepaßt werden kann, und die Seiten (6) so bestimmt sind, daß sie die Befestigung der Pfetten (8) oder-Querstreben (9) ermöglichen.

3. Träger-Traufe gemäß irgendeinem der vorhergehenden Ansprüche, dadurch gekennzeichnet, daß die beiden den oberen Teil (2) und den unteren Teil (3) bildenden Profile durch Verschraubung oder Verschweißung zusammengefügt sind.

4. Träger-Traufe gemäß irgendeinem der vorhergehenden Ansprüche, dadurch gekennzeichnet, daß der obere Teil (2) aus einem C-Profil besteht, dessen Kanten (5) nach innen gebogen sind, damit sie zur Befestigung der Abdeckung benutzt werden können.
